Europäisches Patentamt

European Patent Office

Office européen des brevets

(19)

(11) Publication number: **0 353 095**
**A2**

(12) # EUROPEAN PATENT APPLICATION

(21) Application number: **89307709.9**

(22) Date of filing: **28.07.89**

(51) Int. Cl.⁵: **B 08 B 17/00**
**B 63 B 59/04, C 02 F 1/48**

(30) Priority: **28.07.88 JP 189429/88**
**17.04.89 JP 96753/89**

(43) Date of publication of application:
**31.01.90 Bulletin 90/05**

(84) Designated Contracting States: **DE FR GB IT NL**

(71) Applicant: **Ezoe, Tuguo**
**2-701, 1 Nagai Higashi 1-chome**
**Sumiyoshi-ku Osaka (JP)**

(72) Inventor: **Ezoe, Tuguo**
**2-701, 1 Nagai Higashi 1-chome**
**Sumiyoshi-ku Osaka (JP)**

(74) Representative: **Matthews, Heather Clare et al**
**Keith W Nash & Co Pearl Assurance House 90-92 Regent Street**
**Cambridge CB2 1DP (GB)**

(54) **A preventive method against apposition of a marine organism and a preventive sheet against apposition of a marine organism.**

(57) A preventive method against apposition of a marine organism characterized in that a furry sheet (A) having white or green mink-like furs (2),(4) frown thick thereon, for example such as a boa cloth obtained by napping the front surface of a polyester cloth, is attached to such portions of a construct (10a),(C) as to be brought into contact with a sea water (S) with its furs (2),(4) facing toward the seawater side. A preventive sheet (A) against apposition of a marine organism is also disclosed. The sheet (A) comprises a base member (1),(5) to be attached to the submerged portion of a construct (10a),(C) and fur-like fibers (2),(4) thickly provided on the front surface of said base member (1),(5) so as to be as flexible as to naturally sway in a water. The fur-like fibers (2),(4) may be raised vertically in a straight fashion and may contain an ultraviolet-ray absorbent. The base member (1),(5) may be dotted over with magnetic pieces (20) such as magnets.

Fig. 2b

Fig. 2a

EP 0 353 095 A2

## Description

# A PREVENTIVE METHOD AGAINST APPOSITION OF A MARINE ORGANISM AND A PREVENTIVE SHEET AGAINST APPOSITION OF A MARINE ORGANISM

## BACKGROUND OF THE INVENTION

### 1. Field of the Invention

The present invention relates to a preventive method against apposition of a marine organism such as a mussel, an oyster and a barnacle and to a preventive sheet against apposition of a marine organism, which is adapted to be attached for use to such as bottom surfaces and the like of a watercraft, a ship, a structure and a construct such as a water suction pipe and a water discharge pipe both submerged in a water, a storage tank for crude oil, LPG and so on floating in a water, an oil fence, a floating buoy, a marine buoy and so on.

### 2. Prior Art

Conventionally, in order to reduce a harmful influence of apposition of a shellfish such as a mussel, an oyster and a barnacle on a water suction pipe or a water discharge pipe provided in a structure and a construct both used below the water or in contact with the water and on a bottom surface of a buoy or a ship, has been studied various preventive methods against apposition of a shellfish and the like.

As a preventive method against apposition of a shellfish to be carried out on the side of the structure among them, has been known the one provided with a preventive means called "a corrugated copper pipe". This is adapted to generate copper ions in a sea in order to kill larvae of shellfishes. Therefore, there is a problem associated with the method, that a sea water itself is polluted by copper ions to become harmful.

Accordingly, almost always a man dives into a sea to remove shellfishes from the above-mentioned submerged object by the power of man at the right time when the apposite shellfishes are grown to a fair amount. Since such removing works are laborious and troublesome as well as the operations of plants and facilities must be stopped during the removing work, the work man is in danger as well as the operation efficiency thereof is bad.

## SUMMARY OF THE INVENTION

The present invention is directed to solving the above-mentioned problems and developed by the inventor of the present invention as a result of his whole hearted study.

A method according to the present invention provides a safety countermeasure to keep off larvae of shellfishes by cleverly making good use of such an ecological and physiological phenomena that larvae of shellfishes don't attach to an analysis swaying object such as seaweeds and algae while straying in a sea and is characterized in that a furry sheet having mink-like furs grown thick thereon is attached to the submerged portions of a construct with its furs facing toward the sea water side.

A preventive sheet against apposition of a marine organism according to the present invention comprises a base member to be attached to the submerged portion of a construct and fur-like fibers thickly provided on the front surface of the base member so as to be flexible as to naturally sway in a water.

When manufacturing this preventive sheet against apposition of a marine organism according to the present invention, fiber elements for the base texture and fine fibered furs grown thick on the front surface thereof may be made from different materials respectively and further the sheet may be formed by raising fine fiber elements from the front surface of the base texture by means of so-called piling process and the like or may be formed by rooting fine fiber elements in the front surface of the base texture.

It is preferable in consideration of an activation of the sway movements in a water that the fur-like fibers grown thick on the front surface of the base member may be raised substantially vertically in a straight fashion with respect to the base member. Further, in case that the preventive sheet is used in a case with being strongly applied with the sun's rays, preferably the fur-like fibers may contain an ultraviolet-ray absorbent in order to prevent the degradation from being caused by the ultraviolet ray as well as to improve durability.

Further more, in order to facilitate the attachment to the construct as well as to improve the durability, it is preferable that the base member may be applied at its back surface with a back coating formed of rubber and the like.

According to the experiment carried out by the inventor, the preventive sheet of the present invention is preferably provided with fiber elements grown thick on the base texture, which are required to be as flexible as to freely sway in a water and are ab. 0.01 - 0.3 mm in diameter and ab. 10 mm - 30 mm long in the case of the fiber elements having an ordinary stiffness when considering the work efficiency for rooting them in the base texture.

Further, in case that the preventive sheet is used on the water discharge pipe of the construct, the base member may be dotted over with magnetic pieces such as magnets so as to simultaneously prevent the production of scales and the apposition of seaweeds on the pipe in addition to the function to rid the pipe of shellfishes owing to the free away movements of the fibered furs in a water. Accordingly, it becomes possible to provide a discharge pipe having an enhanced added value.

According to the present invention, since preventive sheet is provided thickly on the front surface with white or green mink-like furs with facing toward the sea water side so that the mink-like furs can move in a swaying manner like seaweeds in a water, it is possible to keep off larvae of shellfish straying in a sea as well as to prevent the apposition of such larvae thereon.

In case that a base member is dotted over with magnetic pieces such as magnets, since it becomes possible to prevent the production of scales and the apposition of seaweeds owing to the magnetic force in addition to the function to rid an object of shellfishes owing to the sway movements of the fur-like fibers in a water, the preventive sheet is more advantageous when being applied to a water discharge pipe and the like in a water.

The above and other objectives and advantages of the present invention will become more apparent from the following description of the invention with reference to the attached drawings.

## BRIEF DESCRIPTION OF THE DRAWINGS

Fig.1 is a perspective view showing one example of a preventive sheet against apposition of a marine organism of the present invention;

Fig.2a is a front view showing an outer appearance of a water suction pipe provided with a preventive sheet against apposition of a marine organism thereof;

Fig.2b is a vertical sectional view of a L-shaped portion near the opening of the water suction pipe;

Fig.2c is a partial enlarged sectional view of the water suction pipe shown in Fig.2a.

Fig.2d is a partial enlarged sectional view showing a fixing way of the preventive sheet;

Fig.3 is an explanatory view showing one example in the case of a marine buoy its bottom surface provided with the preventive sheet; and

Fig.4 is a perspective view showing the back surface, dotted over with magnetic pieces, of the preventive sheet against apposition of the marine organism.

## DETAILED DESCRIPTION OF PREFERRED EMBODIMENT

Now one embodiment of the present invention will be explained with reference to the drawings hereinafter.

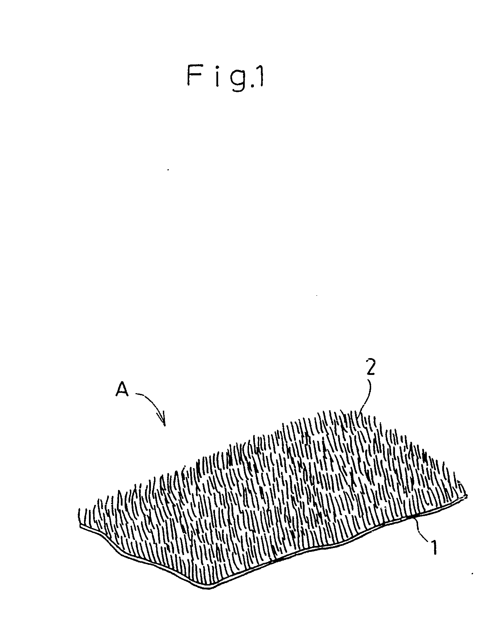

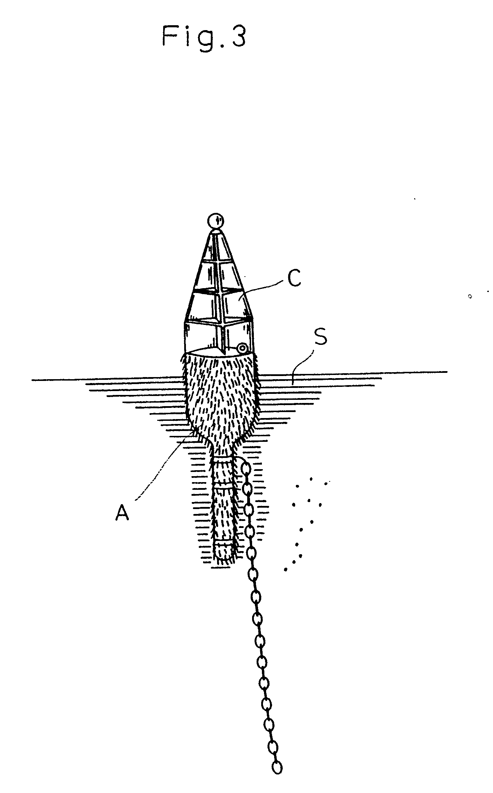

As shown in Fig.1, a sheet A of the present invention comprises a base member 1, a large number of flexible fur-like fibers 2 grown thick on the front surface thereof and is adapted to be attached at its back surface to a submerged portion of a construct ( for example, as shown in Fig.3 ) by means of adhesive and the like. Each of the fur-like fibers 2 has a sufficient length and a sufficient flexibility to freely sway in a water when the base member 1 is submerged into the water.

As the sheet A, can be employed a cloth made of polyethylene ( high-molecular or ultrahigh-molecular ) besides a boa cloth obtained by napping the cloth made of polyester. Especially in the case that the durability is required for the cloth, polypropylene can be preferably employed.

The fur-like fibers 2 can be formed by napped the front surface of the base texture 1 or by rooting the fine fiber elements thickly in the front surface of the base texture 1, which elements may be made of different materials from the fiber elements used for the base texture 1.

It is preferable in consideration of the facilitation of sway movement and sticking work in a water that the fur-like fibers 2 napped from the front surface of the base member 1 are ab. 0.01 - 0.5 mm in diameter and ab. 10 - 30 mm long. Further, it is preferable that the color of the fiber 2 is green resembling to that of a seaweed or an alga besides white or gray having a high reflectivity.

Incidentally, the fibers 2 may contain an ultraviolet-ray absorbent. In this case, since the fibers 2 can effectively prevent the degradation from being caused by the ultraviolet ray during being exposed under the sun's ray, the durability thereof is further improved when being used in a sea.

On the other hand, when the base member 1 is attached to the construct, besides an ordinary attaching method employing an adhesive, a releasable fastener or a hook (not illustrated) may be used or the base member 1 may be attached thereto after being stitched in a bag shape.

Further, in order to increase the strength of the base member 1, a back coating formed of a rubber membrane such as a neoprene rubber may be applied thereto. In case that the back coating is applied, it becomes possible to effectively prevent a reverse penetration of an adhesive toward the front side of the base member 1 and also a workability at the time of cutting can be improved.

In order to activate natural sway movements of the fur-like fibers 2 in a water, the fibers 2 are preferably napped in a straight fashion and are preferably ab.10 - 30 mm long, in the case of an ordinary fiber, in consideration of the working efficiency at the time of sticking to the construct.

Then, will be explained a concrete use example of the preventive sheet according to the prevent invention.

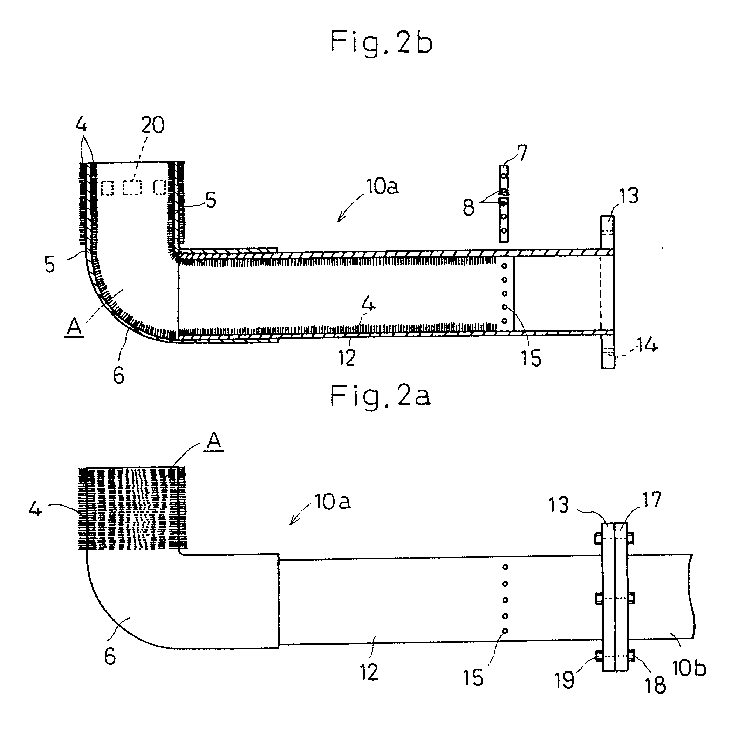

As shown in Fig. 2a and Fig. 2b , the preventive sheet A is stuck to suitable portions of the inner circumferential surface and the outer circumferential surface of a seawater suction pipe 10 as a construct, namely stuck throughout the surfaces of the places to which shellfishes are apt to appose.

Though the places to which the shellfishes are apt to appose differ depending on case-by-case constructs, the preventive sheet A is stuck to the whole of the inner circumferential wall of the leading portion 10a of the pipe 10 and the outer surface near the opening portion thereof by means of an adhesive applied to the backside of the base sheet 5 with facing the mink-like furs 4 toward the seawater side in the example shown in Fig. 2a and Fig. 2b.

Even though it is enough to stick such preventive sheet A only by means of an adhesive, further the end portion thereof on the base portion 10b side of the suction pipe 10 is fixedly secured by means of a fixing belt 7 in this illustrated example.

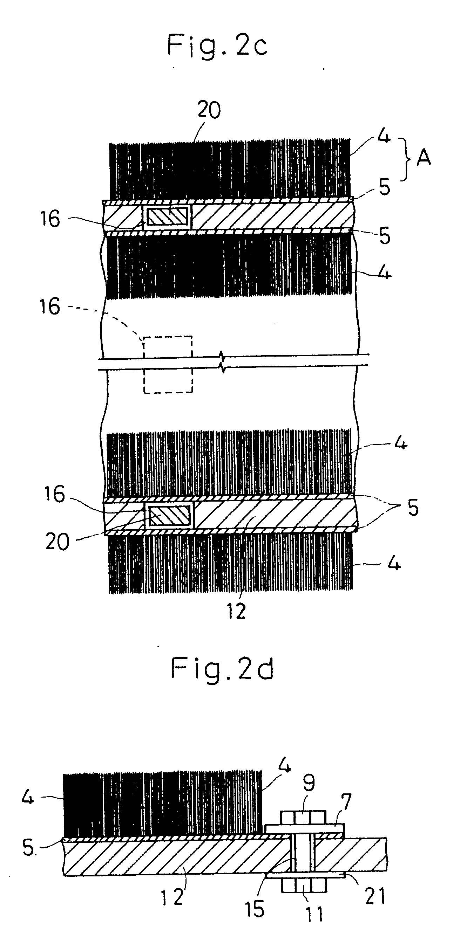

As shown in Fig. 2d, the fixing belt 7 is pressed onto the preventive sheet A along the circumferential direction from the inside of the straight portion 12 of the pipe 10 by tightening the nuts 11 threadably engaged with the bolts 9 put through the holes 8 of the belt 7 as well as through the holes 15 formed in the side wall of the straight portion 12 with washers 21 being interposed between the nuts 11 and the side wall of the pipe 10.

The leading portion 10a is provided at its end on the base portion 6 side with a flange 13 having bolt-holes 14 for connecting the leading portion 10a to the base portion 10b.

As the preventive sheet A, may be used a known adequate furred sheet such as a mink-like napped cloth, and a cloth and a sheet both having furs rooted in their front surfaces. But since it is apprehended that such cloth and sheet are not durable sufficiently, this embodiment employs a boa cloth which is obtained napping ( piling ) a cloth made of polyester.

The length of the fur 4 is selected depending on the relation to the diameter of the base portion 6 of the suction pipe 10, and is usually settled to be several mm or ab. 1 cm. And the furs 4 are preferably rooted in the front surface of the sheet A substantially in a vertical manner.

A plurality of permanent magnets 20 are embedded in the side wall of the L-shaped portion 6 adjacent to the opening portion. As shown in Fig. 2c, this embodiment employs the permanent magnets 20 fitted in the cut-out portions 16 spaced apart at a suitable interval in the circumferential direction of the L-shaped portion 6. In this case, since the magnetic force is generated near the opening portion, the larvae of the shellfishes hardly enter the water suction pipe 10 so that the apposition of the shellfishes can be prevented more effectively.

As shown in Fig. 2b, the leading portion 10a of the water suction pipe 10 is connected to the base portion 10b thereof provided at its leading end with a flange 17 by tightening the nuts 19 threadably engaged with the bolts 18 put though both flanges 13, 17 brought into contact with each other.

As the result of the experiment carried out in the leading portion 10a of the water suction pipe 10 constituted as mentioned above, it is observed that the larvae of the shellfishes don't appose and grow at all on the inner surfaces of the the straight portion 12 and the L-shaped portion 6 as well as the outer surface of the L-shaped portion 6 both provided with the preventive sheets A.

Accordingly, it can be clearly understood that the apposition of the shellfish to the water suction pipe can be completely prevented when this leading portion 10a is connected to the opening end portion of the base portion 6 of the water suction pipe 10.

According to the above explanation, after the base sheet 5 thickly provided with the furs 4 is attached to the leading portion 10a of the water suction pipe 10, the leading portion 10a is connected to the base portion 10b previously submerged in the sea in order to facilitate he attachment and the replacement of the preventive sheets A. Besides, it is of course that the preventive sheet A may be directly attached to the portion adjacent to the opening of the water suction pipe 10 previously arranged.

Fig. 3 shows the example in which the preventive sheet A according to the present invention is stuck to the bottom surface of a buoy C floating in a sea. When being stuck to such construct C, the preventive sheet A is stuck to the whole portions thereof to be brought into contact with the seawater S.

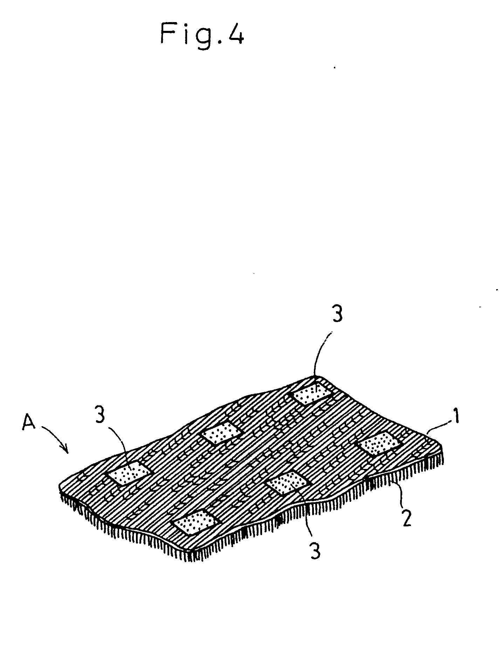

Fig. 4 shows one example of the preventive sheet A dotted over with magnetic pieces 3 which are stuck to the backside of the base member 1 with being spaced apart each other at a suitable interval. It is not always necessary to stick the magnetic pieces 3 onto the surface in contact with the seawater, but they may be attached to the cut-out portions of the construct so as to be held in with the preventive sheet A.

The application of the preventive sheet A according to the present invention is not limited to the above-mentioned ones, but the preventive sheet A may be attached to the places of constructs to be brought into contact with a seawater and a fresh water, such as a seawater storage tank in a facility using a seawater, for example of an aquarium, a crude oil suction pipe and a drilling facility provided in an offshore oil field and a transmitting and receiving device of a fish detector, besides the bottom surface of a ship, an oil or LPG storage tank floating in a sea, an oil fence, a floating buoy provided in a fish farm and a marine buoy, in order to keep off the larvae of the shellfishes and to prevent the apposition and the propagation of the shellfishes.

[Experiment Example]

Water suction pipes X, Y made of vinyl chloride having the diameter of 150 mm$\varnothing$ and the length of 1,500 mm are submerged as the samples of this experiment to the sea bottom of the 3 m in depth at an offshore 200 m distant from the Sodesode Hama Jyoen at Dojyo-Cho Aza Kosode Shodo-Gun Kagawa-Prefecture.

The outer surfaces of both the sample pipes were colored with a white paint. The preventive sheet ( made of a acrylic fiber ) having a white sheet-color according to the present invention was stuck to a portion of the outer surface of the pipe and a portion of the inner surface thereof by use of an adhesive. The preventive sheet had a mink-like appearance and was pressed and stuck like that after being cut in suitable sizes from its backside and being applied with an adhesive. As an adhesive, Sekisui S-dyn 510-R was used, but WEP having a superior innoxious salt-resistive characteristic may be also used.

Since the peak season for the larvae of a barnacle and an oyster is from May to June, the experiment was started on 10th May, 1988 and ended on 26th Oct.,1988 via August as a breeding season of other kinds of shellfishes to take out the samples X, Y from the sea bottom.

[The Result of the Experiment]

The appositional condition of the shellfishes on the samples was observed with the unaided eye because the unaided eye examination is enough therefor. As the result of the unaided eye examination, though barnacles and oysters apposed and grew on such portions of the outer surfaces of the pipes as to be not provided with the preventive sheets, no appositions of the shellfishes were observed on such portions of the sample X as to be provided with the preventive sheets.

As being expected, it was observed that shellfishes such as barnacles apposed a few on the top surface of the pipe exposed under the sun's rays and much on the opposite lateral sides. This is a reason why the shellfishes are supposed to hate the ultraviolet ray among the sun's rays by instinct. To the contrary , a great many barnacles apposed and grew thick on the inner top surface of the pipe.

The test for the inner surface of the pipe was carried out together with the blank test. The apposition of the shellfishes is not observed on such places of the inner surfaces of the pipe as the sample Y as to be provided with the preventive sheet but observed on such portions as to be not provided with the preventive sheet. In order to observe the inside of the pipe further in detail, the pipe was cut longitudinally and the picture thereof was taken.

The preventive method against apposition of the shellfish can maintain its effectiveness as far as the preventive sheets are not peeled off from predetermined places, and the apposition of the shellfishes can be prevented for a long time.

The preventive method according to the present invention is based on the ecological instinct of the shellfish, namely is making good use of the physiological abomination of the larvae of the shellfishes against a dirty soft unstable always swaying object and the ultraviolet ray. To the contrary, the larvae have such an instinct as to be anxious to physiologically appose to a hard stationary place.

This method is based on the conceptional idea basically different from conventional methods and provides an innoxious nonpolluting lasting inexpensive effective countermeasure against the apposition of the shellfish as far as the base member of the preventive sheet is not peeled off.

Some of the many features and advantages of the present invention should now be apparent. For example, since the preventive sheet is simply stuck to such portions of a construct as to be brought into contact with a seawater and a freshwater for preventing the apposition of a marine organism such as a shellfish, the attaching work is easy.

Since the present invention is making good use of the physiological abomination of the larvae of the shellfishes against a dirty soft unstable always swaying object for keeping off the shellfishes , the preventive method and sheet are innoxious, nonpolluting and safety.

Since the preventive sheet can be manufactured by the same manufacturing method as an ordinary boa cloth, its productivity is good and it is manufactured at a low cost.

It is understood that the above-mentioned embodiment is only illustrative, and that various modifications and steps may be made by those skilled in the art without departing from the spirit and scope of the invention as claimed.

**Claims**

1. A preventive method against apposition of a marine organism, characterized by attaching a furry sheet (A) having white or green mink-like furs (2),(4) grown thick thereon to such portions of a construct as to be brought into contact with a seawater (S) with its furs (2),(4) facing toward the seawater side.

2. A preventive method as defined in Claim 1, characterized in that a boa cloth manufactured by napping the front surface of a polyester cloth is used as said sheet (A).

3. A preventive method as defined in Claim 1 or Claim2, characterized in that a magnet (3),(20) is embedded near the portions of said construct (10a),(C) to be brought into contact with the seawater.

4. A preventive sheet (A) against apposition of a marine organism characterized in that said sheet comprises a base member (1),(5) to be attached to the submerged portion of a construct (10a),(C) and fur-like fibers (2),(4) thickly provided on the front surface of said base member (1),(5) so as to be as flexible as to naturally sway in a water.

5. A preventive sheet (A) as defined in Claim 4, characterized in that said fur-like fibers (2),(4) are raised substantially vertically in a straight fashion with respect to the base member (1),(5).

6. A preventive sheet (A) as defined in Claim 4, characterized in that said fur-like fibers (2),(4) contain an ultraviolet-ray absorbent.

7. A preventive sheet(A) as defined in Claim 4, characterized in that said fur-like fibers (2),(4) are formed by napping one surface of a polyester cloth.

8. A preventive sheet (A) as defined in Claim 4, characterized in that said fur-like fibers (2),(4) are formed by napping one surface of a polycarbonate cloth.

9. A preventive sheet (A) as defined in Claim 4, chatacterized in that a back coating made of a rubber is applied to the backside of said base member (1),(5).

10. A preventive sheet (A) as defined in Claim 4, characterized in that said fur-like fibers (2),(4) are formed of flexible fiber elements which are ab. 0.01 - 0.3 mm in diameter and ab. 10 - 30 mm long.

11. A preventive sheet (A) as defined in Claim 4, characterized in that said base member (1),(5) is dotted over with magnetic pieces (20) such as magnets.

12. A preventive sheet (A) as defined in Claim 4, characterized in that said fur-like fibers (2),(4) are white or green.

# Fig.1

Fig.2b

Fig.2a

# Fig.2c

# Fig.2d

Fig.3

# Fig.4